(19) Europäisches Patentamt
European Patent Office
Office européen des brevets

(11) **EP 2 721 932 B1**

(12) **EUROPEAN PATENT SPECIFICATION**

(45) Date of publication and mention
of the grant of the patent:
**05.09.2018 Bulletin 2018/36**

(51) Int Cl.:
***A23K 50/42*** (2016.01)   ***A23K 40/10*** (2016.01)
***A23K 40/20*** (2016.01)   ***A23K 40/30*** (2016.01)
***A23K 20/132*** (2016.01)   ***A23K 20/158*** (2016.01)
***A23K 40/25*** (2016.01)

(21) Application number: **12800961.0**

(22) Date of filing: **11.06.2012**

(86) International application number:
**PCT/JP2012/064883**

(87) International publication number:
**WO 2012/173078 (20.12.2012 Gazette 2012/51)**

(54) **PET FOOD MANUFACTURING METHOD**

HERSTELLUNGSVERFAHREN FÜR HAUSTIERFUTTER

PROCÉDÉ DE FABRICATION D'UN ALIMENT POUR ANIMAUX DE COMPAGNIE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **16.06.2011   JP 2011134614
21.12.2011   JP 2011280512**

(43) Date of publication of application:
**23.04.2014   Bulletin 2014/17**

(73) Proprietor: **Unicharm Corporation
Ehime 799-0111 (JP)**

(72) Inventors:
• **SAKAJI Kimihiko
Itami-shi
Hyogo 664-0831 (JP)**
• **YAMAMOTO Junichi
Itami-shi
Hyogo 664-0831 (JP)**
• **YOSHIGA Fumisato
Itami-shi
Hyogo 664-0831 (JP)**

(74) Representative: **Staeger & Sperling
Partnerschaftsgesellschaft mbB
Sonnenstraße 19
80331 München (DE)**

(56) References cited:
WO-A1-00/51442        JP-A- 2 299 555
JP-A- 9 009 939        JP-A- S6 439 953
JP-A- 63 098 362       JP-A- 2004 033 095
JP-A- 2009 189 244     JP-A- 2009 503 146
JP-A- 2011 000 090     US-A- 3 158 486
US-A- 4 006 266        US-A- 4 743 459
US-A1- 2010 062 111    US-A1- 2010 303 967
US-A1- 2010 303 968    US-A1- 2010 303 976

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The present invention relates to a pet food manufacturing method. More specifically, the invention relates to a manufacturing method for a pet food having improved palatability.

BACKGROUND ART

In order to provide a comprehensive nutritional diet for pets, a method of manufacturing a pet food with improved palatability (desirability) by granulating a pet food composition containing a blend of nutritionally balanced ingredients, heating the granules to alphatize the starch component and dry the granules, and then subjecting the granules to a frying treatment in oil at a temperature of not more than 180°C has already been disclosed (Patent Document 1).
Further, a pet food manufacturing method in which a granulated pet food is molded into a flat plate shape using an extruder has also been disclosed (Patent Document 2). A flat plate-shaped pet food can be fed to a pet from the hand of the owner, and therefore improves the feeling of satisfaction for both the owner and the pet.

DOCUMENTS OF RELATED ART

PATENT DOCUMENTS

[Patent Document 1] Japanese Unexamined Patent Application, First Publication No, Sho 64-39953
[Patent Document 2] Japanese Patent (Granted) Publication No. 3,793,845 Further prior art in this technical field is disclosed in documents US 2010/062111 A1, US 4,743,459 A, US 3,158,486 A and US 2010/303976 A1.

SUMMARY OF THE INVENTION

PROBLEMS TO BE SOLVED BY THE INVENTION

A technique in which a pet food is subjected to a frying treatment in oil in order to improve palatability has already been disclosed as a conventional method of manufacturing a pet food. However, a problem arises in that the calorific content of the pet food increases In recent years, health awareness has also increased in the field of pet food, and pet foods that are good for the health of the pet, as well as having excellent palatability are very desirable.
The present invention has been developed in light of the above circumstances, and has an object of providing a highly palatable pet food that is formulated using a blend of ingredients having good nutritional balance with the health of the pet in mind, as well as a manufacturing method for the pet food.

MEANS TO SOLVE THE PROBLEMS

The present invention is defined by the combination of features according to claim 1. Aspects thereof and further aspects are described below.

(1) A pet food manufacturing method that includes a granulation step of granulating a mixture of ingredients to obtain food granules, and a baking step of baking the food granules.
(2) The pet food manufacturing method disclosed above in (1), wherein the baking step is performed at a temperature that generates pyrazines in the food granules.
(3) The pet food manufacturing method disclosed above in (2), wherein the baking step is performed so that the pyrazine content within the food granules following the baking step is at least 0.10 ppm higher than the pyrazine content within the food granules prior to the baking step.
(4) The pet food manufacturing method disclosed above in (2) or (3), wherein the pyrazines are 2,5-dimethylpyrazine, 2,6-dimethylpyrazine and/or 2,3,5-trimethylpyrazine.
(5) The pet food manufacturing method disclosed above in any one of (1) to (4), wherein the baking step is performed by conducting heating using far infrared radiation.
(6) The pet food manufacturing method disclosed above in any one of (1) to (5), wherein the shortest diameter and the longest diameter of the food granules following the granulation step are both within a range from 3 mm to 30 mm.
(7) The pet food manufacturing method disclosed above in any one of (1) to (6), wherein during the granulation step, the formed food granules are dried by hot air at 70 to 90°C.

(8) The pet food manufacturing method disclosed above in any one of (5) to (7), wherein during the baking step, the far infrared radiation is irradiated so as to generate an atmospheric temperature of 160 to 230°C.

(9) The pet food manufacturing method disclosed above in (8), wherein the time of the irradiation is within a range from 20 seconds to 55 seconds.

(10) The pet food manufacturing method disclosed above in (8) or (9), wherein during the baking step, a ceramic heater is used as the irradiation source for the far infrared radiation, and baking is performed with the distance between the ceramic heater and the food granules obtained in the granulation step set within a range from 80 mm to 120 mm.

(11) The pet food manufacturing method disclosed above in any one of (5) to (10), wherein during the baking step, the food granules are transported on a mesh while the far infrared radiation is irradiated from above and/or below the mesh.

(12) The pet food manufacturing method disclosed above in any one of (1) to (7), wherein the temperature of the baking step is within a range from 270°C to 370°C.

(13) The pet food manufacturing method disclosed above in (12), wherein the time of the baking step is from 20 seconds to 75 seconds.

(14) The pet food manufacturing method disclosed above in any one of (1) to (13), wherein the water content within the food granules immediately prior to baking is not more than 12.0% by weight.

(15) The pet food manufacturing method disclosed above in any one of (1) to (14), wherein during the granulation step, the mixture is heated at a temperature of at least 50°C but not more than 150°C.

(16) The pet food manufacturing method disclosed above in any one of (1) to (15), wherein during the granulation step, an extruder is used to granulate the mixture of ingredients and obtain food granules.

(17) The pet food manufacturing method disclosed above in any one of (1) to (16), further including, either prior to the baking step or after the baking step, an oil or fat addition step of impregnating the food granules with an oil or fat.

(18) The pet food manufacturing method disclosed above in (17), wherein the oil or fat addition step is performed after the baking step.

(19) The pet food manufacturing method disclosed above in (17) or (18), wherein the oil or fat addition step is a step of heating the food granules to 40°C or higher, reducing the pressure in a state where the oil or fat is in contact with the surface of the food granules, and then subsequently returning the pressure to atmospheric pressure.

(20) A pet food, manufactured by the pet food manufacturing method disclosed above in any one of (1) to (19).

(21) The pet food disclosed above in (20), containing at least 0.70 ppm of pyrazines.

(22) The pet food disclosed above in (21), wherein the pyrazines are 2,5-dimethylpyrazine, 2,6-dimethylpyrazine and/or 2,3,5-trimethylpyrazine.

(23) The pet food disclosed above in any one of (20) to (22), wherein the water content is less than 8.0% by weight.

(24) The pet food disclosed above in any one of (20) to (23), wherein the fat content is not more than 22.0% by weight.

EFFECTS OF THE INVENTION

According to the pet food manufacturing method of the present invention, a pet food having good nutritional balance and excellent palatability (desirability) by pets can be manufactured. Further, because a favorable taste is achieved without performing a frying treatment in oil, a low-calorie pet food can be manufactured. The pet food of the present invention exhibits excellent palatability (desirability) by pets, and can therefore satisfy the desires of health-conscious owners.

BRIEF DESCRIPTION OF THE DRAWINGS

FIG. 1 is a schematic view illustrating one embodiment of the manufacturing method according to the present invention.
FIG. 2 is a graph illustrating the water content (wt%) and the water activity (AW) of food granules obtained when the heating time is varied.
FIG. 3 is a schematic view illustrating one embodiment of a vacuum coating method.

EMBODIMENTS

The pet food manufacturing method of the present invention is defined by the subject-matter of the appended claims.

<<Pet Food Manufacturing Method>>

A pet food manufacturing method of the present invention includes at least a step of granulating a mixture of ingredients to obtain food granules (granulation step), and a step of baking the food granules (baking step).

Conventionally, food granules have been heated by frying in oil, but the oil content of the resulting food granules can sometimes be excessive, and regulating the oil content has proven difficult. If the health of the pet is taken into consideration, then a pet food containing excessive oil or fat is undesirable.

In contrast, by baking the food granules, the oil content of the food granules obtained following baking can be prevented from becoming excessively high. Because oil can be added separately as required, the oil content of the pet food can be regulated more easily. In other words, the manufacture of a low-calorie pet food can be achieved more easily, based on a nutritional design for the pet food, such as the calorific content. Further, by performing baking, the taste and texture of the pet food can be improved.

<Granulation Step>

The granulation step is a step of granulating a mixture of ingredients to obtain food granules.

For the ingredients, the types of ingredients typically used as a complete source of nutrition for pet food can be used. The main nutrients contained within the ingredients are proteins and carbohydrates.

Examples of the proteins include plant-derived proteins, animal-derived proteins, and mixtures thereof. Specifically, examples of preferred plant-derived proteins include gluten, wheat protein, soy protein, rice protein, and corn protein. Examples of the animal-derived proteins include the proteins from the muscles and organs of beef, pigs, chickens and fish, milk protein, and mixtures thereof. These proteins also contain fats, vitamins and iron and the like, and are therefore ideal as a nutritional source.

Examples of preferred carbohydrates include carbohydrates from grains such as corn, wheat, barley, oats, rice and soybeans. In addition to carbohydrates, these grains also contain protein, ash, minerals and vitamins and the like, and are therefore ideal as a nutritional source.

As the aforementioned ingredients, besides the proteins and carbohydrates mentioned above, vitamins and minerals, salts, fats, and animal protein extracts and the like may also be added to the aforementioned mixture.

For example, ingredients may be mixed together using the formulations shown below in Table 1.

[Table 1]

|  | Formulation for cats | Formulation for dogs |
|---|---|---|
| Grains (such as corn, wheat flour, corn gluten meal or soybeans) | 55 to 75% | 65 to 85% |
| Meat (such as chicken meal, pork meal or chicken extract) | 10 to 25% | 7 to 20% |
| Fish (such as fish meal or fish extract) | 5 to 15% | 5 to 15% |
| Vitamins and minerals (individual vitamins for cats or dogs) | 2 to 5% | 2 to 5% |
| Animal-based fat (beef tallow) | 3 to 6% | 3 to 6% |
| Total | 100% | 100% |

The aforementioned mixture is obtained by mixing the ingredients in the desired blend ratio. During mixing, water, vegetable oil, or animal fat or the like may be added as appropriate. By adding these components, the ingredients can be mixed more uniformly.

The method used for obtaining the mixture may employ conventional methods in which the ingredients are ground and mixed using a mixer or the like. In the method used for granulating the mixture, an extruder is used. A conventional extruder capable of granulating the food mixture into granules of the appropriate size can be used. By using an extruder, the mixture can be pressurized, which enables the hardness of the obtained food granules to be regulated.

In the present invention, the term "granulate" describes the process of molding the mixture into a shape that can be consumed by pets. In the present invention, there are no particular limitations on the shape of the molded food granules, provided the shape is edible by pets, and any shape can be used, including spheres, polyhedral shapes, cylinders, donut shapes, flat plate shapes and disc shapes. Further, the size of the molded food granules may be small enough to enable the pet to eat a granule in a single mouthful, or may be large enough that the pet needs to bite into the granule a number of times.

The shape of the food granules is preferably a disc shape in which the shortest diameter and the longest diameter are both within a range from 3 mm to 30 mm. By using this shape, heat conduction occurs favorably in the subsequent baking step, and a larger amount of pyrazines can be generated in the food granules.

Furthermore, the shape of the food granules may be a plate shape, cylindrical shape or tube shape that is too large to be eaten by the pet. In this case, the granules are preferably reduced in size to a shape that is readily edible by pets following either the subsequent drying treatment or the baking step.

In the granulation step of the present invention, during the molding of the mixture to form the granules, a heat treatment is preferably performed to alphatize the carbohydrates in the mixture. Performing alphatization has the effects of improving the taste and texture of the obtained food granules, as well as better promoting the generation of pyrazines in the baking treatment performed in the subsequent baking step.

The heat treatment during the granulation is preferably performed at a temperature of not more than 150°C, a temperature of 50 to 120°C is more preferable, and a temperature of 80 to 100°C is still more preferable. When heating is performed at this temperature, the time of the heating treatment is preferably within a range from 1 minute to 20 minutes, more preferably from 2 minutes to 20 minutes, and still more preferably from 3 minutes to 6 minutes.

Provided the temperature is at least as high as the lower limit of the above temperature range and the time is at least as long as the lower limit of the above time range, the pyrazine generation-promoting effect described above can be satisfactorily realized. Provided the temperature is not more than the upper limit of the above temperature range, excessive heating of the ingredients can be avoided.

In the granulation step, a treatment for drying the food granules is performed. This has the effect of better promoting the generation of pyrazines in the subsequent baking step. Here, a description is presented for the case where the drying treatment is performed in the granulation step, but a drying step may also be provided separately from the granulation step.

<Drying Treatment>

A method of performing drying by blowing hot air onto the granules is used. This method in which drying is performed by blowing hot air onto the granules improves the taste of the pet food.

The temperature of the hot air blown onto the granules is from 70 to 90°C. When drying is performed at these temperatures, the length of time for the drying treatment is preferably from 1 minute to 120 minutes, more preferably from 5 minutes to 60 minutes, and still more preferably from 10 minutes to 30 minutes.

Provided the temperature is at least as high as the lower limit of the above temperature range and the time is at least as long as the lower limit of the above time range, the food granules can be dried in a comparatively short time. Provided the temperature is not more than the upper limit of the above temperature range, excessive heating of the food granules can be avoided.

The temperature of the aforementioned heating treatment and the temperature of the drying treatment may be the same or different.

The water content of the food granules following the drying treatment but prior to baking is not more than 12.0% by weight, more preferably from 3.0 to 10.0% by weight, and still more preferably from 5.0 to 8.0% by weight.

By ensuring that the water content of the food granules is within the above range, the amount of pyrazines generated within the food granules by the subsequent baking treatment can be increased. Further, the taste and texture can be improved.

<Baking Step>

The baking step is a step of baking the food granules obtained in the granulation step described above.

In the present invention, the term "baking" means heating the food granules in the air at a high temperature for a short period of time.

The baking temperature in the method of the present invention is preferably a temperature that causes the generation of pyrazines in the food granules obtained following baking.

By performing the baking at a temperature that generates pyrazines, components that improve the palatability by pets can be produced within the food granules. Further, pyrazines can improve the palatability by pets.

The baking in the method of the present invention is preferably performed at a temperature that causes the pyrazine content within the food granules obtained following baking to be at least 0.10 ppm higher than the pyrazine content within the food granules prior to baking.

By performing baking at a temperature that generates at least 0.10 ppm of pyrazines, larger amounts of those components that improve the palatability by pets can be produced within the food granules. Further, by incorporating at least 0.10 ppm of pyrazines within the food granules, pet palatability can be improved.

In the present invention, the term "pyrazines" refers to pyrazine, represented by the chemical formula $C_4H_4N_2$, and pyrazine derivatives in which one or more of the hydrogen atoms of pyrazine have each been substituted with an alkyl group of 1 to 6 carbon atoms. The alkyl group of 1 to 6 carbon atoms may be linear, branched or cyclic, is preferably a linear or branched alkyl group of 1 to 3 carbon atoms, and is more preferably a methyl group or an ethyl group. The number of hydrogen atoms substituted is preferably from 1 to 3.

By incorporating these pyrazines in a pet food, the palatability by pets can be improved.

The pyrazines are preferably 2,5-dimethylpyrazine (2,5-DMP), 2,6-dimethylpyrazine (2,6-DMP) and/or 2,3,5-trimethylpyrazine (2,3,5-TMP). Food granules that have been baked so as to incorporate these pyrazines are able to further improve the palatability by pets.

The concentration of pyrazines within the food granules following baking is preferably within a range from 0.30 ppm to 30 ppm, more preferably from 0.70 ppm to 20 ppm, still more preferably from 1.50 ppm to 10.0 ppm, and particularly preferably from 3.00 ppm to 6.00 ppm. Here, the concentration of pyrazines refers to the total amount of 2,5-DMP, 2,6-DMP and 2,3,5-TMP.

By ensuring that the pyrazine concentration is at least as high as the lower limit of the above range, the palatability by pets can be further improved.

By ensuring that the pyrazine concentration is not more than the upper limit of the above range, the fragrance (smell) of the pyrazines can be prevented from becoming overly powerful.

The baking temperature and the baking time may be set appropriately by a person skilled in the art in accordance with the shape and size of the food granules, so as to increase the amount of pyrazines within the food granules following baking, and improve the taste and texture of the food granules (pet food).

For example, the food granules may be heated by placement in an atmosphere exceeding 150°C for a period of 5 to 200 seconds. It is more preferable that the food granules are heated by placement in an atmosphere of 270°C to 370°C for a period of 20 to 75 seconds. Such heat treatment does not form part of the invention.

There are no particular limitations on the method used for baking the food granules, and one preferred example is a method in which the food granules are arrayed on a mesh, and heat rays or hot air is then projected onto the granules from above and/or below the mesh. The irradiation source for the heat rays or the hot air is preferably a ceramic heater which is heated by a gas burner and generates far infrared radiation. Using far infrared radiation simplifies the adjustment of the water content of the food granules following baking, and yields favorable taste and texture, enabling food granules to be obtained that exhibit excellent palatability by pets.

The method of baking the food granules of the invention is a method in which the food granules are baked by irradiation with far infrared radiation.

By baking the food granules using far infrared radiation, the granules can be heated through to the interior more quickly than is possible with grilling or roasting. As a result, the heating equipment can be simplified, and equipment expenditure can be kept to a minimum. Furthermore, by performing heating using far infrared radiation, the water content of the food granules following baking can be regulated more easily, and the taste and texture of the pet food can be improved.

On the other hand, in terms of other baking methods, in those cases where the food granules are grilled using a flame or roasted, the heating time sometimes needs to be lengthened in order to ensure thorough heating is achieved through to the interior of the food granules. In such cases, if an industrial production line is used, then the line length increases, causing a problem of increased equipment costs.

In terms of the baking temperature and the baking time, one example that does not form part of the invention involves heating the food granules by placing them in an atmosphere of at least 250°C for 5 to 200 seconds. Specifically, investigations may be conducted within a temperature range from 250°C to 380°C and within a time range of 5 to 200 seconds. Provided the food granules prior to baking are of typical shape and size, the baking temperature is preferably from 270 to 370°C, more preferably from 270 to 350°C, and still more preferably from 280 to 330°C. In this case, the baking time is preferably within a range from 5 to 90 seconds, more preferably from 10 to 75 seconds, still more preferably from 20 to 75 seconds, and particularly preferably from 20 to 45 seconds.

By ensuring that the baking temperature and the baking time are at least as large as the respective lower limits described above, larger amounts of pyrazines and/or components that are attractive to pets can be generated within the food granules obtained following baking. By ensuring that the baking temperature and the baking time are not more than the respective upper limits described above, the generation of substances responsible for burnt odors and the like which are disliked by pets can be suppressed.

The above expression that the food granules prior to baking are of typical shape and size means that the shape of the granules is spherical, polyhedral, cylindrical, donut-shaped, flat plate-shaped or disc-shaped or the like, and the granules have a size with a shortest diameter of approximately 3 to 30 mm, and a longest diameter of approximately 5 to 150 mm.

The shape of the food granules prior to baking is preferably a disc shape in which the shortest diameter and the longest diameter are both within a range from 3 mm to 30 mm. By using this shape, heat conduction occurs favorably during the baking treatment, and a larger amount of pyrazines can be generated in the food granules.

(Embodiment)

The food granules are baked by irradiation with far infrared radiation, from the viewpoint of improving the taste and texture, the food granules are preferably baked using a method in which irradiation of the far infrared radiation generates an atmospheric temperature of 160 to 230°C.

An example of a method of baking the food granules by irradiation with far infrared radiation is a method in which the food granules are placed in an oven under an atmosphere (air atmosphere) of 160 to 230°C while far infrared irradiation is performed. In this case, for example, far infrared is irradiated to raise the temperature of the oven prior to introduction of the food granules (the temperature of the empty oven) to 200°C to 330°C, and the food granules are then transported into the oven (atmosphere), thereby irradiating the food granules with far infrared radiation and enabling baking to be performed at an atmospheric temperature of 160°C to 230°C. One example of the method used to form an atmosphere in which irradiation by far infrared radiation has been used to raise the temperature of the oven prior to introduction of the food granules to 200°C to 330°C is a method in which the temperature setting of the far infrared irradiation device used is set to 280°C to 330°C. When the food granules are transported into an atmosphere that has been heated to 200°C to 330°C in an empty state, the atmosphere is cooled as a result of the introduction of the food granules and external air, and the temperature decreases to approximately 160°C to 230°C. When the food granules can be heated stably at 160°C to 230°C, the temperature setting of the device may be set to 160°C to 230°C. The temperatures mentioned in the above examples are shown below in Table 2.

[Table 2]

| | Atmospheric temperature | Temperature setting of far infrared irradiation device |
| --- | --- | --- |
| Prior to introduction of food granules (empty oven) | 200 to 330°C | 280 to 330°C |
| Following introduction of food granules (during continuous introduction of the food granules) | 160 to 230°C | 160 to 230°C |

When the food granules are baked by irradiation with far infrared radiation so that the atmospheric temperature reaches 160 to 230°C, the baking time may be adjusted appropriately in accordance with the size of the food granules. For example, in the case described above in which the shortest diameter and the longest diameter of the food granules are both within a range from 3 mm to 30 mm, the heating time is within a range from 20 seconds to 55 seconds. By employing these heating conditions, thorough heating through to the interior of the food granules can be achieved, and the taste and texture of the granules can be further improved. In contrast, if the temperature is less than 160°C or the baking time is less than 20 seconds, then the interior of the food granules may remain partly cooked, resulting in unsatisfactory taste and texture. Further, if the baking time exceeds 55 seconds, then the surfaces of the food granules may become badly burnt, causing an unpleasant burnt odor.

In order to enable the far infrared radiation to be irradiated onto the food granules with good efficiency, a method in which the food granules are placed on a mesh and the far infrared radiation is then irradiated onto the food granules from above and/or below the mesh is preferable. By using this method, the lower portions of the food granules can be heated more efficiently than a method in which the food granules are placed on a metal plate and irradiated from above with far infrared radiation.

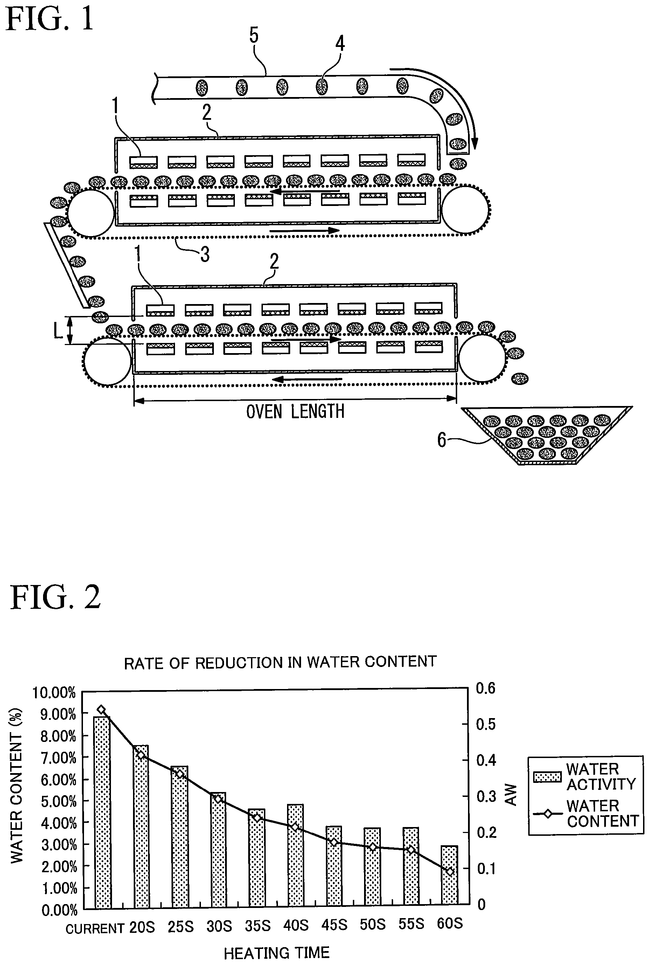

In one specific example of the method, as illustrated in FIG. 1, a metal mesh having the food granules placed thereon is transported using a net conveyor while far infrared radiation is irradiated onto the food granules from above and below the mesh. The heating time of the food granules can be adjusted by regulating the transport speed of the food granules.

A graph illustrating the water content (wt%) and the water activity (AW) of the food granules obtained when the speed of the net conveyor used for transporting the food granules is adjusted to change the heating time is shown in FIG. 2. The water content and the water activity both decrease as the heating time is lengthened, namely as the transport speed is reduced.

A heated ceramic or quartz, or a combusting carbon or the like can be used as the irradiation source of the far infrared radiation. Far infrared radiation is emitted from a ceramic or quartz that has been heated with a gas flame or an electrically heated wire or the like, and this far infrared radiation can then be irradiated onto the food granules. The use of a ceramic heater is preferable, as it exhibits excellent durability and enables the irradiation of powerful far infrared radiation. From the viewpoints of investment in equipment and running costs, a gas flame is preferably used as the method for heating the ceramic.

The distance between the ceramic heater that emits the far infrared radiation and the food granules is preferably within a range from 80 to 120 mm, and more preferably from 90 to 110 mm. When the distance satisfies this range, the food granules can be heated more reliably through to the interior of the granules, while there is no chance of badly burning the surfaces of the granules.

<Coating Step (Oil or Fat Addition Step)>

The present invention may also include a step for performing a treatment other than the aforementioned granulation step and baking step. For example, a coating step may be included before or after the baking step. Specifically, the food granules may be coated with a coating agent containing an animal fat and a meal extract prior to baking, and the baking step then performed. Alternatively, the food granules may be coated with the coating agent following baking to form the completed pet food.

By coating the food granules with an oil or fat, the palatability (desirability) by pets can be improved, and the calorific count of the pet food can be increased as required.

Beef tallow can be used favorably as the aforementioned animal fat. Examples of preferred meal extracts include conventional extracts such as chicken extract (extract derived from chicken meat) and fish extract (extract derived from fish flesh).

The coating agent may be in liquid form or a powdered form, provided it is in a state that enables the food granules to be coated with no irregularities.

In the method of the present invention, the coating step (oil or fat addition step) is preferably performed after the baking step. By coating the baked food granules, an effect is obtained wherein the pyrazines generated within the baked food granules following baking can be sealed inside the food granules, meaning the taste of the manufactured pet food can be stably maintained over long periods. Furthermore, those components generated within the food granules by baking that improve the taste of the granules can also be sealed inside the food granules, and therefore the taste of the manufactured pet food can be more easily maintained in a stable manner over long periods. When far infrared irradiation or the like is performed after coating with an oil or fat, there is a concern that the oil or fat may oxidize, but by adding the oil or fat after the heating by far infrared radiation, this concern can be eliminated.

One example of a preferred method of coating the food granules with an oil or fat or the like is a vacuum coating method in which, by reducing the pressure in a state where the oil or fat is in contact with, or adhered to, the heated food granules, the oil or fat is not only coated onto the surface of the food granules, but also penetrates into the interior of the granules. In those cases where the oil or fat is only adhered to the surface of the food granules, the oil or fat may detach from the food granules when the granules scrape against one another following manufacture. On the other hand, by causing the oil or fat to penetrate into the interior of the food granules, this detachment of the oil or fat from the food granules can be reduced.

The heating performed during addition of the oil or fat is mainly for the purpose of preventing solidification of the oil or fat. There are no particular limitations on the heating temperature, provided the temperature is able to achieve this objective. From the viewpoint of preventing oxidation of the oil or fat, the temperature is preferably as low as possible, and for example, may be set within a range from 40 to 80°C.

There are no particular limitations on the degree of the aforementioned reduction in pressure, provided the oil or fat can be incorporated inside the food granules. The reduction in pressure may be adjusted appropriately in accordance with the size and hardness of the food granules, and for example, the pressure is typically reduced to 0.1 to 0.3 atmospheres.

The amount of the oil or fat added to the food granules can be adjusted appropriately in accordance with the designed calorific level, and for example, the oil or fat can be added in a proportion that results in an amount of oil or fat that represents 5 to 20% by weight of the total weight of the manufactured pet food.

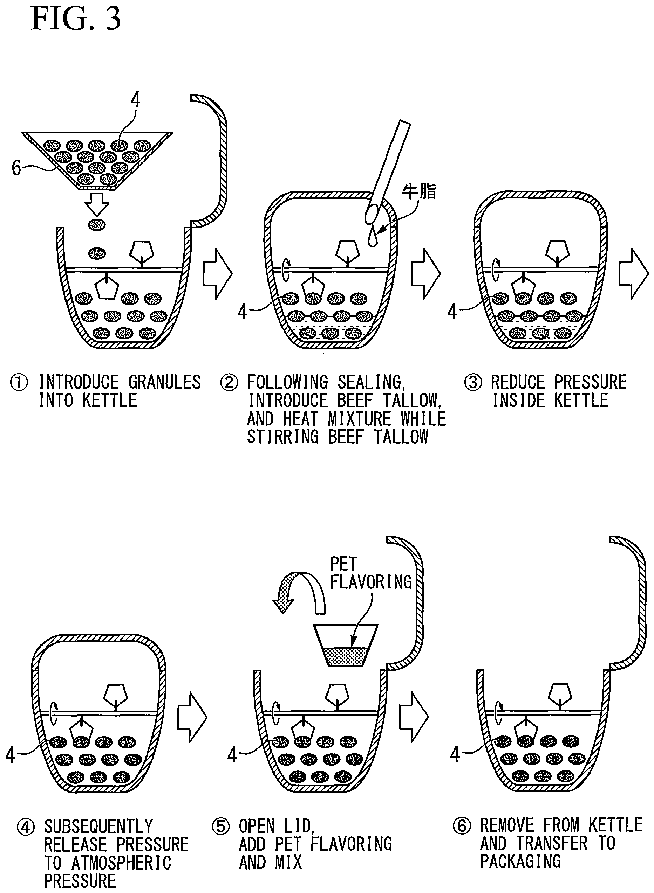

A specific example of the addition of a fat or oil to the food granules using a vacuum coating method is described below with reference to FIG. 3.

First, food granules 4 are introduced into a kettle fitted with stirring fins, and following sealing of the kettle, an oil or fat (beef tallow) is introduced, and the temperature is heated to approximately 40°C while mixing is performed. Next, the pressure inside the kettle is reduced to approximately 0.2 atmospheres under constant stirring, and the pressure is then released gradually back to atmospheric pressure, for example over a period of 1 to 5 minutes, and preferably 1 to 3 minutes. Subsequently, where required, flavoring is added to the kettle and mixed for approximately 2 minutes, and the granules are then transported to a packaging step. By performing the release to atmospheric pressure gradually, the oil or fat can be incorporated uniformly into the interior of the food granules.

<Method of Measuring Pyrazine Content>

The pyrazine content within the food granules and the pet food can be measured using a gas chromatograph-mass spectrometry method. Specifically, measurement using the solvent extraction method described below is preferable. The pyrazine content values reported in the present invention refer to numerical values measured using this solvent extraction method.

(Solvent Extraction Method)

A pet food sample of 2 to 10 g is immersed in 50 ml of water and 20 ml of diethyl ether, the sample is stirred with a homogenizer under ice cooling, 20 g of sodium chloride is added, an extraction is performed by shaking for 10 minutes, and a centrifugal separation is then performed for 5 minutes at 2,000 rpm. The diethyl ether layer is dewatered and filtered, and subsequently concentrated to 4 ml to obtain a test solution. A specified amount of this test solution is injected into a gas chromatograph-mass spectrometer, the mass spectrum is obtained for the peaks in the gas chromatogram corresponding with the pyrazines, and the substances in the sample are identified. Based on the obtained gas chromatogram, the amount of pyrazines within the sample can be calculated. For example, if food granules that have undergone a baking treatment and food granules that have not undergone a baking treatment are measured as test samples, then the pyrazine content of the respective granules can be measured. Ideal conditions for the measurements are described below.

(Operating Conditions for Gas Chromatograph-Mass Spectrometer)

Apparatus: 6890N/5975B inert XL [Agilent Technologies, Inc.], column: DB-WAX [Agilent Technologies, Inc.] Ø0.25 mm × 30 m, film thickness 0.25 $\mu$m, injection volume: 1 $\mu$l, injection system: split (1:5), temperature: sample injection port 220°C, column 60°C (hold for 1 minute) → temperature increase at 10°C/minute → 220°C, gas flow rate: helium (carrier gas) 1 ml/minute, ion source temperature: 230°C, ionization method: EI, set mass values: m/z = 108.42 (2,5-DMP and 2,6-DMP), m/z = 122.42 (2,3,5-TMP).

<<Pet Food>>

The pet food contains at least 0.70 ppm of pyrazines. Here, the term "pyrazines" refers to pyrazine, represented by the chemical formula $C_4H_4N_2$, and pyrazine derivatives in which one or more of the hydrogen atoms of pyrazine have each been substituted with an alkyl group of 1 to 6 carbon atoms. The alkyl group of 1 to 6 carbon atoms may be linear, branched or cyclic, but is preferably a linear or branched alkyl group of 1 to 3 carbon atoms, and is more preferably a methyl group or an ethyl group. The number of hydrogen atoms which are substituted is preferably from 1 to 3.

By incorporating at least 0.70 ppm of these pyrazines, the palatability of the pet food by pets can be improved.

The concentration of pyrazines contained within the pet food is preferably within a range from 0.70 ppm to 30 ppm, more preferably from 1.00 ppm to 20 ppm, still more preferably from 1.50 ppm to 10.0 ppm, and particularly preferably from 3.00 ppm to 6.00 ppm. Here, the concentration of pyrazines refers to the total amount of 2,5-DMP, 2,6-DMP and 2,3,5-TMP.

By ensuring that the pyrazine concentration is at least as high as the lower limit of the above range, the palatability by pets can be further improved.

By ensuring that the pyrazine concentration is not more than the upper limit of the above range, the fragrance (smell) of the pyrazines can be prevented from becoming overly powerful.

The water content of the pet food is preferably less than 8.0% by weight, more preferably from 2.0 to 6.0% by weight, and still more preferably from 2.0 to 5.0% by weight.

By ensuring that the water content of the pet food is at least as high as the lower limit of the above range, the pet food can be prevented from becoming excessively hard, or becoming so excessively brittle that the shape cannot be retained. Further, by ensuring that the water content of the pet food is less than 8.0% by weight, or not more than the upper limit of the above range, the pyrazines can more easily evaporate at an appropriate level, thereby ensuring a favorable taste for the pet food, and improving the palatability by pets.

The fat content of the pet food of the present invention is preferably not more than 22.0% by weight. Although there are no particular limitations on the lower limit, considering the basis for a comprehensive nutritional diet, the fat content is preferably at least 8.1%.

By ensuring that the fat content satisfies the above range, the calorific count and cholesterol content of the pet food can be reduced, which contributes to the health of the pet. Further, when the fat content is not more than 22.0% by weight, the compatibility between the texture of the pet food and the fragrance of the pyrazines contained in the pet food improves, meaning the palatability by pets can be improved.

The pet food can be manufactured using conventional ingredients, by the method described above.

The pet food is eaten by choice by all non-plant animals, and is liked by cats and dogs, and particularly liked by cats.

EXAMPLES

The present invention is described below in further detail using a series of examples, but the present invention is in no way limited by the following examples.

<Pet Food Manufacture>

[Examples 1 to 4, not forming part of the invention]

Using the blend ratios shown in Table 3, grains, meat, fish; vitamins and minerals were mixed together and then ground in a mixer to obtain ingredient mixtures.
The grains included corn, wheat flour, corn gluten meal, or soybeans or the like. The meat included chicken meal or pork meal or the like. The fish contained fish meal or the like.

[Table 3]

|  | Example 1 | Example 2 | Example 3 | Example 4 |
|---|---|---|---|---|
|  | Blend A (parts by weight) | Blend B (parts by weight) | Blend C (parts by weight) | Blend D (parts by weight) |
| Grains | 65 | 68 | 58 | 49 |
| Meat | 25 | 22 | 13 | 21 |
| Fish | 3 | 4 | 12 | 7 |
| Vitamins and minerals | 2 | 2 | 2 | 3 |
| Total (parts by weight) | 95 | 96 | 85 | 80 |

Each of the obtained mixtures was granulated using an extruder to produce disc-shaped food granules having a diameter of 8 mm and a height (thickness) of 2 mm. At this time, a heat treatment was performed at 80 to 100°C for 4 minutes, thereby alphatizing the starch component.
The thus obtained food granules were subjected to a drying treatment using a dryer at approximately 100°C for approximately 20 minutes, thus yielding dry food granules.
The obtained dry food granules were subjected to a baking treatment at 300°C for 30 minutes using ceramic heaters heated by a gas burner, thus forming baked food granules.
The resulting baked food granules were coated with an animal-based fat (beef tallow), a chicken extract and a fish extract to complete manufacture of a pet food. The coating process was performed so that, relative to the weight of the aforementioned mixture, the granules were coated with 4 parts by weight of the animal-based fat and 2 parts by weight of the chicken extract and fish extract.

[Example 5, not forming part of the invention]

With the exception of changing the baking time to 60 seconds, a pet food was obtained in the same manner as Example 4.

[Example 6, not forming part of the invention]

With the exception of changing the baking time to 90 seconds, a pet food was obtained in the same manner as Example 4.

[Comparative Examples 1 to 4]

Following preparation of the aforementioned dry food granules of the blends A to D, coating was performed without performing the aforementioned baking treatment, thus completing manufacture of pet foods of Comparative Examples 1 to 4.

<Pyrazine Content Analysis>

Analysis of the pyrazine content of the manufactured pet foods by gas chromatograph-mass spectrometry using the solvent extraction described above yielded the results shown in Table 4. The units are ppm. In Table 4, a value of "0" indicates a result less than the detection limit of 0.10 ppm.

[Table 4]

| | Comparative Example 1 | Example 1 | Comparative Example 2 | Example 2 | Comparative Example 3 | Example 3 | Comparative Example 4 | Example 4 | Example 5 | Example 6 |
|---|---|---|---|---|---|---|---|---|---|---|
| | Blend A | Blend A | Blend B | Blend B | Blend C | Blend C | Blend D | Blend D | Blend D | Blend D |
| 2,5-DMP | 0 | 0.3 | 0.1 | 1.7 | 0.1 | 3.9 | 0.3 | 1.6 | 15.0 | 7.0 |
| 2,6-DMP | 0 | 0 | 0 | 0.6 | 0 | 1.2 | 0.1 | 0.5 | 7.4 | 6.9 |
| 2,3,5-TMP | 0 | 0.1 | 0 | 0.7 | 0.1 | 1.9 | 0.2 | 1.2 | 26.0 | 26.0 |

Based on the above results, it is clear that the baking treatment results in an increase in the amount of at least one of 2,5-dimethylpyrazine (2,5-DMP), 2,6-dimethylpyrazine (2,6-DMP) and 2,3,5-trimethylpyrazine (2,3,5-TMP).

<Water Content Measurement>

The water content of each of the pet foods of Examples 1 to 4 and Comparative Examples 1 to 4 was measured using the normal pressure heated drying method described below. The results are shown in Table 5. The units are % by weight.

(Normal Pressure Heated Drying Method)

The weight (W1 grams) of an aluminum weighing can was measured in advance as a constant weight. A sample was placed in the aluminum weighing can, and the weight (W2 grams) was measured. Subsequently, using a forced circulation hot air dryer, the sample was dried at 135°C for 2 hours. Following cooling by standing in a dry atmosphere (inside a silica gel desiccator), the weight (W3 grams) was remeasured. The water content was determined from the measured weight values using the following formula.

$$\text{Water content (\%)} = (W2\text{-}W3) \div (W2\text{-}W1) \times 100$$

Further, the fat content values for Examples 1 to 4 were measured using the acid decomposition diethyl ether extraction method described below. The results are shown in Table 5. The units are % by weight.

(Acid Decomposition Diethyl Ether Extraction Method)

A 2 g analysis sample was weighed accurately and placed in a 100 ml beaker, 2 ml of ethanol was added, and following stirring of the mixture with a glass rod to swell the sample, 20 ml of 28% hydrochloric acid was added, the beaker was covered with a watch glass, and the beaker was then placed in a hot water bath at 70 to 80°C and heated for one hour with occasional stirring of the contents, before being left to stand to cool.
The contents of the beaker were placed in a 200 mL separating funnel A, the beaker was washed sequentially with 10 ml of ethanol and then 25 ml of diethyl ether, and the wash liquids were both added to the separating funnel A.

A further 75 ml of diethyl ether was added to the separating funnel A, and the separating funnel was then shaken and left to stand. The diethyl ether layer (upper layer) was extracted using a pipette or the like, and placed in a 300 ml separating funnel B which already contained 20 ml of water.

Next, 50 ml of diethyl ether was added to the separating funnel A, the funnel was shaken and left to stand, and the diethyl ether layer was then extracted using a pipette or the like and added to the separating funnel B. This operation was performed twice.

The separating funnel B was shaken and left to stand, and the water layer (lower layer) was then discarded. Two additional 20 ml samples of water were then added separately to the separating funnel B, and shaken and discarded in the same manner. The diethyl ether layer was then filtered through a funnel fitted with an absorbent cotton and containing a suitable amount of at least 10 g of (anhydrous) sodium sulfate, and the filtrate was collected in a fat weighing bottle or a 300 ml round bottom flask. This fat weighing bottle or round bottom flask had been dried in advance at 95 to 100°C, cooled by standing in a desiccator, and then weighed accurately.

Next, the filtered diethyl ether was recovered, using a Soxhlet extractor in the case where a fat weighing bottle was used, or using a rotary evaporator in the case where a round bottom flask was used. The recovered diethyl ether was volatilized, the residue was dried at 95 to 100°C for 3 hours, and following standing to cool inside a desiccator, the weight was measured accurately and the crude fat content within the sample was calculated.

[Table 5]

| | Comparative Example 1 | Example 1 | Comparative Example 2 | Example 2 | Comparative Example 3 | Example 3 | Comparative Example 4 | Example 4 |
|---|---|---|---|---|---|---|---|---|
| | Blend A | Blend A | Blend B | Blend B | Blend C | Blend C | Blend D | Blend D |
| Water content (% by weight) | 9.0 | 6.0 | 9.0 | 5.0 | 7.0 | 4.0 | 8.0 | 5.0 |
| Fat content (% by weight) | – | 11.0 | – | 10.0 | – | 20.0 | – | 22.0 |

Based on the above results, it is clear that the baking treatment reduces the water content by approximately 3.0 to 4.0% by weight. Further, the fat content values for the pet foods of Examples 1 to 4 were all 22.0% by weight or less.

<Measurement of Rate of Reduction in Free Amino Acids>

Free amino acid analyses were performed for the pet foods of Examples 2 and 4 and Comparative Examples 2 and 4, and for Examples 2 and 4, the rates of reduction in lysine, histidine and methionine as a result of the baking treatment were determined using the following formula.

$$\text{Rate of reduction (\%)} = \{(\text{amino acid content of example}) - (\text{amino acid content of comparative example})\} \div (\text{amino acid content of comparative example}) \times 100$$

The results are shown in Table 6.

[Table 6]

| | Example 2 | Example 4 |
|---|---|---|
| | Blend B | Blend D |
| Lysine | 10.85 | 8.95 |

(continued)

|  | Example 2 | Example 4 |
|---|---|---|
|  | Blend B | Blend D |
| Histidine | 10.58 | 10.36 |
| Methionine | 7.15 | 5.60 |

Based on the above results, it is clear that the amounts of lysine, histidine and methionine all decreased by at least 5.0% as a result of the baking treatment.

The results of performing free amino acid analyses of the dry food granules in the manufacturing process described above using a conventional amino acid analysis method described below are shown in Table 7. The units are %.

(Free Amino Acid Analysis)

To a sample of 1.5 g was added and mixed 25 ml of a 10 w/v% sulfosalicylic acid solution, and an extraction was performed by shaking for 20 minutes. A sodium hydroxide solution of 3 mol/L was added to neutralize the obtained extract, a sodium citrate buffer solution of pH 2.2 was then added to adjust the pH of the extract to 2.2 and make the total volume up to 50 ml, and the extract was then filtered.

Using a portion of the thus obtained filtrate as a test solution, an amino acid automatic analysis method was used to quantify the amounts of 17 free amino acids, namely arginine, lysine, histidine, phenylalanine, tyrosine, leucine, isoleucine, methionine, valine, alanine, glycine, proline, glutamic acid, serine, threonine, aspartic acid and cystine. The conditions are described below.

(Operating Conditions for Amino Acid Automatic Analyzer)

Apparatus: L-8800 high-speed amino acid analyzer [Hitachi High-Technologies Corporation], column: Hitachi custom ion exchange resin Ø46 mm × 60 mm [Hitachi High-Technologies Corporation], mobile phase: MCI L-8500-PF (PF-1 to PF-4) [Mitsubishi Chemical Corporation], reaction reagent: ninhydrin coloring solution kit for Hitachi [manufactured by Wako Pure Chemical Industries, Ltd.], flow rates: mobile phase 0.35 ml/minute, reaction reagent 0.30 ml/minute, measurement wavelength: 570 nm (for measurement of the 16 amino acids excluding proline) and 440 nm (for measuring proline).

Further, measurement of the amount of tryptophan, which is not included within the 17 amino acids mentioned above, was performed in the following manner. A 2.5 ml sample of the above filtrate was extracted, the sample was made slightly alkaline by adding a 3 mol/L sodium hydroxide solution, thus preparing a 10 ml test solution, and this test solution was analyzed by high-performance liquid chromatography.

The conditions are described below.

(Operating Conditions for High-Performance Liquid Chromatograph)

Apparatus: LC-20AD [Shimadzu Corporation], detector: fluorescence spectrophotometer RF-20A$_{XS}$ [Shimadzu Corporation], column: Capcell Pak C18 AQ Ø4.6 mm × 250 mm [Shiseido Co., Ltd.], mobile phase: mixed solution of 20 mmol/L perchloric acid and methanol (mixing ratio 80:20), flow rate: 0.7 mm/minute, fluorescence excitation wavelength: 285 nm, fluorescence measurement wavelength: 348 nm, column temperature: 40°C.

[Table 7]

|  | Blend A (%) | Blend B (%) | Blend C (%) | Blend D (%) |
|---|---|---|---|---|
| Arginine | 0.051 | 0.0231 | 0.0182 | 0.0392 |
| Lysine | 0.035 | 0.0198 | 0.0343 | 0.0958 |
| Histidine | 0.010 | 0.0209 | 0.0129 | 0.0152 |
| Phenylalanine | 0.018 | 0.0143 | 0.0332 | 0.0370 |
| Tyrosine | 0.020 | 0.0143 | 0.0204 | 0.0239 |
| Leucine | 0.030 | 0.0242 | 0.0600 | 0.0631 |

(continued)

| | Blend A (%) | Blend B (%) | Blend C (%) | Blend D (%) |
|---|---|---|---|---|
| Isoleucine | 0.016 | 0.0099 | 0.0279 | 0.0305 |
| Methionine | 0.018 | 0.0671 | 0.2894 | 0.3939 |
| Valine | 0.024 | 0.0176 | 0.0418 | 0.0522 |
| Alanine | 0.058 | 0.0506 | 0.0954 | 0.1055 |
| Glycine | 0.030 | 0.0209 | 0.0322 | 0.2078 |
| Proline | 0.054 | 0.0506 | 0.0536 | 0.0696 |
| Glutamic acid | 0.079 | 0.0385 | 0.0632 | 0.0740 |
| Serine | 0.027 | 0.0143 | 0.0268 | 0.0501 |
| Threonine | 0.021 | 0.0121 | 0.0236 | 0.0326 |
| Aspartic acid | 0.063 | 0.0286 | 0.0375 | 0.0588 |
| Tryptophan | 0.009 | 0.0055 | 0.0064 | 0.0065 |

Based on the above results, it is clear that by using dry food granules containing a large amount of free methionine, the pyrazine content of the aforementioned baked food granules can be increased. Further, it is also clear that the pyrazine content of the baked food granules can be increased by using dry food granules having a large free amino acid content.

<Palatability Evaluation (1)>

The palatability (desirability) of Examples 1 to 4 and Comparative Examples 1 to 4 were evaluated using the method described below. The results are shown in Table 8.

The evaluation method was as follows.

First, a first pair of pet foods through to a fourth pair of pet foods were prepared, namely a pair composed of Example 1 and Comparative Example 1, a pair composed of Example 2 and Comparative Example 2, a pair composed of Example 3 and Comparative Example 3, and a pair composed of Example 4 and Comparative Example 4. Each pair was tested over two days using 20 cats as monitors.

On the first day, each cat was provided with 70 g of each of the pet foods of the first pair, with the first pet food supplied from the left and the second pet food supplied from the right, and the amount of each pet food eaten by the cat was measured after one hour.

Based on the total weight of pet food consumed by the cat on the first day, the amount consumed of the pet food of the example and the amount consumed of the pet food of the comparative example were determined as percentages. The percentages obtained for the 20 cats being monitored were averaged to obtain the first day results.

On the second day, each cat was provided with 70 g of each of the pet foods of the first pair, with the first pet food supplied from the right and the second pet food supplied from the left, and the amount of each pet food eaten by the cat was measured after one hour.

Based on the total weight of pet food consumed by the cat on the second day, the amount consumed of the pet food of the example and the amount consumed of the pet food of the comparative example were determined as percentages. The percentages obtained for the 20 cats being monitored were averaged to obtain the second day results.

Finally, the results for the first day and the second day were averaged, and the consumption ratio that represents the final result (palatability) was determined. A higher numerical value for this palatability indicates greater consumption by choice by the monitored cats.

The pet foods of the second pair through to the fourth pair were evaluated in the same manner as the pet foods of the first pair.

[Table 8]

| | Comparative Example 1 | Example 1 | Comparative Example 2 | Example 2 | Comparative Example 3 | Example 3 | Comparative Example 4 | Example 4 |
|---|---|---|---|---|---|---|---|---|
| | Blend A | Blend A | Blend B | Blend B | Blend C | Blend C | Blend D | Blend D |
| Palatability | 36 | 64 | 34 | 66 | 44 | 56 | 41 | 59 |

Based on the above results, it is clear that Examples 1 to 4 exhibited superior palatability to Comparative Examples 1 to 4.

<Palatability Evaluation (2)>

The palatability (desirability) of Example 4 and Comparative Example 4 were evaluated using the two bowl test and the single use test described below. The results are shown in Tables 9 and 10.

The two bowl test was performed over a continuous 6-day period, by simultaneously providing the pet foods of Example 4 and Comparative Example 4, and recording the eating habits of the cat. In this test, the amounts consumed were not measured, but rather the owner of the cat judged which of the test items exhibited better palatability for the cat. A pair of one owner and one cat was regarded as one monitor, and evaluations were performed by 50 monitors. The two bowl test was performed using the sequence (a1) to (e1) described below.

(a1) On the first day, the two types of pet foods, namely Example 4 and Comparative Example 4, were provided simultaneously on the left and right in an amount of 70 g per day, and the eating habits of the cat were checked. At this time, the amounts consumed were not measured. Twenty five of the monitors provided Example 4 from the left side, and the remaining 25 monitors provided Comparative Example 4 from the left side, and the eating habits of the cats were checked.
(b1) On the second day, the left and right positions from which Example 4 and Comparative Example 4 were provided were switched, and the eating habits of the cats were checked.
(c1) On the third day through to the sixth day, the left and right arrangement of the two pet foods was switched each day, and the eating habits of the cat were checked.
(d1) Following completion of the sixth day, the owner made a judgment as to which of Example 4 and Comparative Example 4 the cat preferred. In terms of evaluation criteria, the 50 monitors were asked to respond with an evaluation of "Example 4 was extremely favorable" (AA), "Example 4 was slightly favorable" (AB), "the two were approximately the same with no discernible difference" (C), "Comparative Example 4 was slightly favorable" (BB), or "Comparative Example 4 was extremely favorable" (BA), and the number of each response was calculated as a percentage.
(e1) Based on the above evaluation criteria, a numerical score was calculated for each of Example 4 and Comparative Example 4 using the following formulas.

$$\text{Example 4 score} = (AA) + (AB) + (C) \div 2.$$

$$\text{Comparative Example 4 score} = (BA) + (BB) + (C) \div 2.$$

In the single use test, one pet food of either Example 4 or Comparative Example 4 was provided continuously for 5 days, and the other pet food was then provided continuously for the subsequent 5 days, and the eating habits of the cat were checked. At this time, the amounts consumed were not measured, and the owner made a judgment as to which of the test items exhibited better palatability for the cat. A pair of one owner and one cat was regarded as one monitor, and evaluations were performed by 50 monitors. The single use test was performed using the sequence (a2) to (e2) described below.

(a2) On the first day, the pet food of Example 4 was provided to 25 monitors in an amount of 70 g per day, and the pet food of Comparative Example 4 was provided to the remaining 25 monitors in an amount of 70 g per day, and the eating habits of the cats were checked. At this time, the amounts consumed were not measured.

(b2) On the second day through to the fifth day, the pet foods were supplied in the same manner as the first day, and the eating habits of the cats were checked.

(c2) On the sixth day through to the tenth day, the other pet food, different from that provided on the first to fifth days, was provided to each monitor in an amount of 70 g per day, and the eating habits of the cats were checked.

(d2) Following completion of the tenth day, the owner made a judgment as to which of Example 4 and Comparative Example 4 the cat preferred. In terms of evaluation criteria, the 50 monitors asked to respond with an evaluation of "Example 4 was extremely favorable" (AA), "Example 4 was slightly favorable" (AB), "the two were approximately the same with no discernible difference" (C), "Comparative Example 4 was slightly favorable" (BB), or "Comparative Example 4 was extremely favorable" (BA), and the number of each response was calculated as a percentage.

(e2) Based on the above evaluation criteria, a numerical score was calculated for each of Example 4 and Comparative Example 4 using the following formulas.

$$\text{Example 4 score} = (AA) + (AB) + (C) \div 2.$$

$$\text{Comparative Example 4 score} = (BA) + (BB) + (C) \div 2.$$

[Table 9]

| (Two Bowl Test) | | | | | |
|---|---|---|---|---|---|
| | Comparative Example 4 was extremely favorable (BA) | Comparative Example 4 was slightly favorable (BB) | No discernible difference (C) | Example 4 was slightly favorable (AB) | Example 4 was extremely favorable (AA) |
| Percentage of monitors | 2% | 29% | 10% | 40% | 19% |
| Scores | Comparative Example 4 : Example 4 = 36:64 | | | | |

[Table 10]

| (Single Use Test) | | | | | |
|---|---|---|---|---|---|
| | Comparative Example 4 was extremely favorable (BA) | Comparative Example 4 was slightly favorable (BB) | No discernible difference (C) | Example 4 was slightly favorable (AB) | Example 4 was extremely favorable (AA) |
| Percentage of monitors | 6% | 17% | 37% | 29% | 12% |
| Scores | Comparative Example 4 : Example 4 = 41:59 | | | | |

Based on the above results, it is clear that in both the two bowl test and the single use test, Example 4 exhibited superior palatability to Comparative Example 4.

<Palatability Evaluation (3)>

The palatability (desirability) of the pet foods of Examples 4, 5 and 6 were evaluated. The results are shown in Table 11.

The evaluation method was as follows.

Using 3 cats as monitors, testing was performed in one day. Fifty grams of each of the pet foods of Examples 4, 5 and 6 were provided simultaneously to each cat, and the amounts consumed were measured after 6 hours. The amounts eaten were averaged across the 3 cats, and the resulting average weights were recorded as final results.

[Table 11]

|  | Example 4 | Example 5 | Example 6 |
|---|---|---|---|
| Amount consumed (g) | 40 g | 14 g | 5 g |
| Evaluation | extremely well eaten | well eaten | eaten |

[Comparative Example 5]

With the exception of performing a frying treatment in oil at 180°C for 30 seconds instead of the baking treatment described above, a pet food was manufactured using the same method as that described for Example 4.
Measurement results revealed that the obtained pet food had a fat (oil) content of approximately 27% by weight, exceeding 22.0% by weight.
The pyrazine content of the obtained pet food is also shown in Table 12.

[Reference Example 1]

With the exception of performing a roasting treatment in a frying pan at 180°C for 3 minutes, a pet food was manufactured using the same method as that described for Example 4. In this case, because the roasting treatment was performed by pouring a little oil into the frying pan, the oil content of the obtained pet food was approximately 13.5% by weight.
The pyrazine content of the obtained pet food is also shown in Table 12. The units are ppm.

[Table 12]

|  | Example 4 | Comparative Example 4 | Comparative Example 5 | Reference Example 1 |
|---|---|---|---|---|
|  | Blend D | Blend D | Blend D | Blend D |
| 2,5-DMP | 1.6 | 0.3 | 16.0 | 1.1 |
| 2,6-DMP | 0.5 | 0.1 | 3.6 | 0.4 |
| 2,3,5-TMP | 1.2 | 0.2 | 16.0 | 1.0 |

<Pet Food Manufacture>

[Examples 7 to 10]

Using the blend ratios shown in Table 13, grains, meat, fish, and vitamins and minerals were mixed and then ground in a mixer to obtain ingredient mixtures.
The grains included corn, wheat flour, corn gluten meal, or soybeans or the like. The meat included chicken meal or pork meal or the like. The fish contained fish meal or the like.

[Table 13]

|  | Example 7 | Example 8 | Example 9 | Example 10 |
|---|---|---|---|---|
|  | Blend A (parts by weight) | Blend B (parts by weight) | Blend C (parts by weight) | Blend D (parts by weight) |
| Grains | 65 | 68 | 58 | 49 |
| Meat | 25 | 22 | 13 | 21 |
| Fish | 3 | 4 | 12 | 7 |
| Vitamins and minerals | 2 | 2 | 2 | 3 |
| Total | 95 | 96 | 85 | 80 |

Each of the obtained mixtures was granulated using an extruder to produce disc-shaped food granules having a diameter and height (thickness) of 3 mm to 30 mm. At this time, a heat treatment was performed at 80 to 100°C for 3 to 6 minutes, thereby alphatizing the starch component.

The thus obtained food granules were subjected to a drying treatment, using a dryer, under a hot air stream at 70 to 90°C for 10 to 30 minutes, thus yielding dry food granules. Beef tallow was added to the granules in an amount of 1.5 wt% relative to the weight of the dry food granules, thus coating the surfaces of the dry food granules. This coating prevented the generation of fine powder (dust) from the dry food granules.

Next, as is illustrated schematically in FIG. 1, the dry food granules that had been surface-coated with beef tallow were placed on a metal mesh and transported by a net conveyor, and inside an oven fitted with ceramic heaters, far infrared radiation was irradiated from above and below the mesh to heat the food granules. Specifically, the temperature inside the oven prior to introduction of the food granules (the temperature of the empty oven) was set within a range from 240 to 260°C, the temperature inside the oven during the continuous introduction of the food granules (the temperature during granule transport) was within a range from 190 to 210°C, and the transport speed of the mesh by the net conveyor was adjusted so that each single food granule was subjected to a baking time of 20 to 75 seconds. During baking, the separation distance between the ceramic heaters and the food granules was set to approximately 100 mm. The temperature inside the oven (atmospheric temperature) was monitored using a thermometer installed in a position located 30 mm above the mesh, 350 mm from the edge of the mesh, and 95 mm from the central region of the ceramic heaters.

Following heating, the food granules transported out of the oven were cooled naturally in air while traveling along the net conveyor.

Subsequently, the food granules were placed in a kettle and heated to at least 40°C, and with the granules undergoing constant mixing, an oil or fat was added in an amount of 3 to 15 wt% relative to the weight of the food granules, the pressure inside the kettle was reduced to 0.2 atmospheres, and the pressure was then returned to atmospheric pressure over a period of approximately 2 minutes, thus causing the oil or fat to penetrate into the interior of the food granules.

The food granules obtained in Examples 7 to 10 each had the amount of oil or fat appropriately regulated. Specifically, the oil content was able to be regulated to approximately 13.5 wt%. Further, because the palatability by pets was good, it is clear that the taste and texture of the pet foods obtained using the manufacturing method of Examples 7 to 10 were attractive to pets.

Furthermore, the baking time (heating time) for the irradiation with far infrared radiation was 20 to 75 seconds, which is shorter than the heating time required for grilling or roasting. For example, in the roasting treatment of Reference Example 1, 3 minutes were required to complete the heating process. Using the pet foods of Examples 7 to 10 which were manufactured using far infrared irradiation (baking time: 30 seconds), and the pet food of Reference Example 1 which was manufactured using a 3-minute roasting treatment, palatability evaluations were performed using the same method as that described above for the two bowl test. The evaluation results revealed that the pet foods of Examples 7 to 10 exhibited similar or superior palatability to the pet food of Reference Example 1. Accordingly, the manufacturing method using irradiation with far infrared radiation enables the manufacture of a highly palatable pet food despite using a baking treatment that is shorter than a typical roasting treatment, and therefore it can be said that the method offers excellent manufacturing efficiency.

DESCRIPTION OF THE REFERENCE SIGNS

1: Ceramic heater
2: Oven
3: Net conveyor
4: Food granule
5: Food granules transport line
6: Baked food granules collection container

**Claims**

1. A pet food manufacturing method, comprising:

    a granulation step of granulating a mixture of ingredients to obtain food granules using an extruder while heating at a temperature of at least 50°C but not more than 150°C,

a drying step of drying the food granules by blowing hot air at a temperature from 70 to 90°C, and a baking step of baking the food granules after the drying step using far infrared radiation, the far infrared radiation is irradiated so as to generate an atmospheric temperature of 160 to 230°C, and a time of the irradiation is within a range from 20 seconds to 55 seconds.

2.  The pet food manufacturing method according to claim 1, wherein the baking step is performed causing that a pyrazine content within the food granules following the baking step is at least 0.10 ppm higher than a pyrazine content within the food granules prior to the baking step.

3.  The pet food manufacturing method according to claim 1, wherein a shortest diameter and a longest diameter of the food granules following the granulation step are both within a range from 3 mm to 30 mm.

4.  The pet food manufacturing method according to claim 1, wherein during the baking step, a ceramic heater is used as an irradiation source for the far infrared radiation, and baking is performed with a distance between the ceramic heater and the food granules obtained in the granulation step set within a range from 80 mm to 120 mm.

5.  The pet food manufacturing method according to claim 1, wherein during the baking step, the food granules are transported on a mesh while the far infrared radiation is irradiated from above and/or below the mesh.

6.  The pet food manufacturing method according to claim 1, further comprising, either prior to the baking step or after the baking step, preferably after the baking step, an oil or fat addition step of impregnating the food granules with an oil or fat.

7.  The pet food manufacturing method according to claim 6, wherein the oil or fat addition step is a step of heating the food granules to 40°C or higher, reducing pressure in a state where the oil or fat is in contact with the surface of the food granules, and then subsequently returning the pressure to atmospheric pressure.

**Patentansprüche**

1.  Ein Herstellungsverfahren für Haustierfutter, umfassend:

    einen Granulationsschritt des Granulierens einer Mischung von Zutaten, um Futtergranulate zu erhalten, mittels eines Extruders während des Erhitzens auf eine Temperatur von wenigstens 50 °C jedoch nicht mehr als 150 °C, einen Trockenschritt des Trocknens der Futtergranulate durch Blasen heißer Luft bei einer Temperatur von 70 bis 90 °C, und einen Backschritt des Backens der Futtergranulate nach dem Trockenschritt mittels ferner Infrarotstrahlung, die ferne Infrarotstrahlung wird gestrahlt, um eine atmosphärische Termperatur von 160 °C bis 230 °C zu generieren, und eine Bestrahlungszeit liegt im Bereich von 20 Sekunden bis 55 Sekunden.

2.  Das Herstellungsverfahren für Tierfutter gemäß Anspruch 1, wobei der Backschritt durchgeführt wird zu verursachen, dass ein Pyrazingehalt innerhalb der Futtergranulate nach dem Backschritt wenigstens 0.10 ppm höher als der Pyrazingehalt innerhalb der Futtergranulate vor dem Backschritt ist.

3.  Das Herstellungsverfahren für Tierfutter gemäß Anspruch 1, wobei ein kürzester Durchmesser und ein längster Durchmesser der Futtergranulate nach dem Granulationsschritt jeweils innerhalb eines Bereichs von 3 mm bis 30 mm liegen.

4.  Das Herstellungsverfahren gemäß Anspruch 1, wobei während des Backschritts, ein Keramikheizer als eine Strahlungsquelle für die ferne Infrarotstrahlung genutzt wird, und Backen mit einem Abstand zwischen dem Keramikheizer und den Futtergranulaten, die in dem Granulationsschritt erhalten wurden, innerhalb eines Bereichs von 80 mm bis 120 mm gesetzt ist, durchgeführt wird.

5.  Das Herstellungsverfahren für Tierfutter gemäß Anspruch 1, wobei während dem Backschritt, die Futtergranulate auf einem Netz transportiert werden während die ferne Infrarotstrahlung von oberhalb und/oder unterhalb des Netzes gestrahlt wird.

6.  Das Herstellungsverfahren für Tierfutter gemäß Anspruch 1, ferner umfassend, entweder vor dem Backschritt oder nach dem Backschritt, vorzugsweise nach dem Backschritt, einen Öl oder Fett Additionsschritt des Imprägnierens der Futtergranulate mit einem Öl oder Fett.

**7.** Das Herstellungsverfahren gemäß Anspruch 6, wobei der Öl oder Fett Additionsschritt ein Schritt des Erhitzens des Futtergranulate auf 40 °C oder höher ist, der Druck in einem Zustand, in dem Öl oder Fett in Kontakt mit der Oberfläche der Futtergranulate steht, reduziert und dann anschließend den Druck auf atmosphärischen Druck zurückführt.

**Revendications**

**1.** Procédé de fabrication d'aliment pour animaux de compagnie, comprenant

une étape de granulation consistant à granuler un mélange d'ingrédients pour obtenir des granulés d'aliment au moyen d'une extrudeuse tout en chauffant à une température d'au moins 50 °C, mais ne dépassant pas 150°C, une étape de séchage consistant à sécher les granulés d'aliment en soufflant de l'air chaud à une température de 70 à 90 °C, et une étape de cuisson consistant à cuire les granulés d'aliment après l'étape de séchage au moyen d'un rayonnement infrarouge lointain, le rayonnement infrarouge lointain étant rayonné de sorte à générer une température atmosphérique de 160 à 230 °C, et une durée du rayonnement étant dans une plage de 20 secondes à 55 secondes.

**2.** Procédé de fabrication d'aliment pour animaux de compagnie selon la revendication 1, dans lequel l'étape de cuisson est effectuée en amenant un contenu de pyrazine à l'intérieur des granulés d'aliment suite à l'étape de cuisson à être au moins 0,10 ppm plus élevé qu'un contenu de pyrazine à l'intérieur des granulés d'aliment avant l'étape de cuisson.

**3.** Procédé de fabrication d'aliment pour animaux de compagnie selon la revendication 1, dans lequel un diamètre le plus court et un diamètre le plus long des granulés d'aliment suite à l'étape de granulation sont tous les deux dans une plage de 3 mm à 30 mm.

**4.** Procédé de fabrication d'aliment pour animaux de compagnie selon la revendication 1, dans lequel pendant l'étape de cuisson, un émetteur de chaleur en céramique est utilisé comme une source de rayonnement pour le rayonnement infrarouge lointain, et la cuisson est effectuée avec une distance entre l'émetteur de chaleur en céramique et les granulés d'aliment obtenus dans l'étape de granulation définie dans une plage de 80 mm à 120 mm.

**5.** Procédé de fabrication d'aliment pour animaux de compagnie selon la revendication 1, dans lequel pendant l'étape de cuisson, les granulés d'aliment sont transportés sur une maille alors que le rayonnement infrarouge lointain est rayonné depuis le dessus et/ou depuis le dessous de la maille.

**6.** Procédé de fabrication d'aliment pour animaux de compagnie selon la revendication 1, comprenant en outre, soit avant l'étape de cuisson, soit après l'étape de cuisson, de préférence après l'étape de cuisson, une étape d'ajout d'huile ou de graisse consistant à imprégner les granulés d'aliment d'une huile ou d'une graisse.

**7.** Procédé de fabrication d'aliment pour animaux de compagnie selon la revendication 6, dans lequel l'étape d'ajout d'huile ou de graisse est une étape consistant à chauffer les granulés d'aliment à 40 °C ou plus, à réduire la pression dans un état où l'huile ou la graisse est en contact avec la surface des granulés d'aliment, et puis à remettre ensuite la pression à la pression atmosphérique.

## FIG. 1

## FIG. 2

# FIG. 3

① INTRODUCE GRANULES INTO KETTLE

② FOLLOWING SEALING, INTRODUCE BEEF TALLOW, AND HEAT MIXTURE WHILE STIRRING BEEF TALLOW

③ REDUCE PRESSURE INSIDE KETTLE

牛脂

PET FLAVORING

④ SUBSEQUENTLY RELEASE PRESSURE TO ATMOSPHERIC PRESSURE

⑤ OPEN LID, ADD PET FLAVORING AND MIX

⑥ REMOVE FROM KETTLE AND TRANSFER TO PACKAGING

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP SHO6439953 B
- JP 3793845 B
- US 2010062111 A1
- US 4743459 A
- US 3158486 A
- US 2010303976 A1